(19) **Europäisches Patentamt / European Patent Office / Office européen des brevets**

(11) **EP 4 692 157 A1**

(12) **EUROPEAN PATENT APPLICATION**
published in accordance with Art. 153(4) EPC

(43) Date of publication:
**11.02.2026 Bulletin 2026/07**

(21) Application number: **24778712.0**

(22) Date of filing: **07.02.2024**

(51) International Patent Classification (IPC):
**C08G 59/50** (2006.01)  **C08L 63/00** (2006.01)
**E01C 7/30** (2006.01)

(52) Cooperative Patent Classification (CPC):
**C08G 59/50; C08L 63/00; E01C 7/30**

(86) International application number:
**PCT/JP2024/004213**

(87) International publication number:
**WO 2024/202567 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2023 JP 2023049299**

(71) Applicant: **MITSUBISHI GAS CHEMICAL
COMPANY, INC.**
**Chiyoda-ku**
**Tokyo 100-8324 (JP)**

(72) Inventors:
• **KAWASHIMA, Yuki**
**Hiratsuka-shi, Kanagawa 254-0016 (JP)**
• **HANAOKA, Takuma**
**Hiratsuka-shi, Kanagawa 254-0016 (JP)**

(74) Representative: **Gille Hrabal
Partnerschaftsgesellschaft mbB
Patentanwälte
Brucknerstraße 20
40593 Düsseldorf (DE)**

(54) **PAVING MATERIAL COMPOSITION AND STRUCTURE**

(57) A paving material composition containing: an epoxy resin; an epoxy resin curing agent containing 50% by mass or more of a polyamine compound represented by the following formula (1) or a modified product thereof, (A); and an aggregate.

$$H_2N\text{-}CH_2\text{-}X\text{-}CH_2\text{-}NH_2 \qquad (1)$$

wherein X is a cyclohexylene group.

## Description

Technical Field

The present invention relates to a paving material composition and a structure.

Background Art

Natural stone is used as an aggregate in paving materials for landscape paving. By using natural stone, a paving material that blends in with the landscape of parks, tourist spots, and the like better than asphalt or concrete can be obtained.

For paving materials for landscape paving, the obtained structure needs to be strong, and generally it is also desirable to have high water permeability. Further, particularly for landscape paving materials, a high weather resistance is preferable.

Paving material compositions having excellent weather resistance that use an epoxy resin as a binder resin are known. For example, Patent Literature 1 discloses that a paving material obtained by kneading, as an aggregate binder, a weather resistant epoxy fiberized resin mainly composed of a mixture of an alicyclic epoxy resin in which an aromatic benzene ring has been substituted by a reduction reaction and fibers having a fiber diameter and fiber length of a predetermined value or less is strong, water permeable, and has excellent weather resistance.

Citation List

Patent Literature

PTL 1: JP 2002-294616 A

Summary of Invention

Technical Problem

However, the technology disclosed in Patent Literature 1 involves fiberizing by kneading an epoxy resin, which is a binder resin, with fibers, and the process of obtaining the structure is complicated. In addition, since paving materials for landscape paving are usually used outdoors, it is important that such paving materials not only have high initial strength, but also that their strength does not decrease after exposure to rain and the like.

A problem to be solved by the present invention is to provide a paving material composition that can obtain a structure having high water permeability, weather resistance, and strength, and excellent strength retention rate even in a humid environment.

Solution to Problem

The present inventors have discovered that the above problem can be solved by a paving material composition containing an epoxy resin, a predetermined epoxy resin curing agent, and an aggregate.

That is, the present invention relates to the following.

[1] A paving material composition containing:

an epoxy resin, an epoxy resin curing agent containing 50% by mass or more of a polyamine compound represented by the following formula (1) or a modified product thereof, (A); and an aggregate,

$$H_2N-CH_2-X-CH_2-NH_2 \qquad (1)$$

wherein X is a cyclohexylene group.

[2] The paving material composition according to the above [1], wherein the modified product of the polyamine compound is at least one selected from the group consisting of the following (I) to (IV):

(I) a Mannich reaction product of the polyamine compound represented by formula (1), a phenolic compound, and an aldehyde compound;

(II) a reaction product of the polyamine compound represented by formula (1) and an unsaturated hydrocarbon compound;

(III) a reaction product of the polyamine compound represented by formula (1) and an epoxy compound having at least one epoxy group; and

(IV) a reaction product of the polyamine compound represented by formula (1) and an unsaturated carboxylic acid or a derivative thereof.

[3] The paving material composition according to the above [1] or [2], wherein a mass ratio of the epoxy resin to the aggregate, [epoxy resin/aggregate], is in a range of 0.005 to 0.5.

[4] The paving material composition according to any one of the above [1] to [3], wherein the aggregate has a particle size of 0.002 to 50 mm.

[5] A structure containing a cured product of the paving material composition according to any one of the above [1] to [4].

Advantageous Effects of Invention

According to the present invention, it is possible to provide a paving material composition that can obtain a structure having high water permeability, weather resistance, and strength, and excellent strength retention rate even in a humid environment.

Description of Embodiments

[Definitions]

As used herein, "paving material composition" refers to a composition that contains a paving material aggregate and is used to form a paving material. The "paving material composition" in the present invention does not encompass a primer composition or the like used for a paving material.

As used herein, the strength of the structure obtained by curing the paving material composition can be evaluated by the method described in the Examples, using the maximum bending stress as an index. In the following description, "strength of the structure" means the initial strength of the structure, unless otherwise specified, and a high initial strength of the structure means that the value of the maximum bending stress before the structure is immersed in water is large.

Further, the strength retention rate of the structure in a humid environment is a value determined based on the ratio between the initial (before immersion in water) maximum bending stress of the obtained structure and the maximum bending stress after immersion in water for a predetermined period of time, and can be calculated specifically by the method described in the Examples.

[Paving material composition]

The paving material composition of the present invention (hereinafter also simply referred to as the "composition (of the present invention)") contains: an epoxy resin; an epoxy resin curing agent containing 50% by mass or more of a polyamine compound represented by the following formula (1) or a modified product thereof, (A); and an aggregate.

$$H_2N\text{-}CH_2\text{-}X\text{-}CH_2\text{-}NH_2 \qquad (1)$$

In formula (1), X is a cyclohexylene group.

By having the above-described configuration, the composition of the present invention can form a structure that has high water permeability, weather resistance, and strength, and has excellent strength retention rate even in a humid environment.

The reason why the composition of the present invention exhibits the above-described effects is not entirely clear, but it is thought to be as follows.

The polyamine compound represented by formula (1) is an aliphatic cyclic polyamine, and has moderate hydrophilicity, but is more hydrophobic than an aliphatic chain polyamine. When the polyamine compound represented by formula (1) is used as an epoxy resin curing agent, a cured product having a high glass transition temperature (Tg) can be obtained. Due to these properties, it is thought that a cured product of the composition of the present invention, which uses an epoxy resin curing agent containing a predetermined amount or more of the polyamine compound or a modified product thereof, has high water permeability, as well as high strength and high strength retention rate in a humid environment. In addition, since the polyamine compound represented by formula (1) does not contain an aromatic ring and has a low proportion of nitrogen atoms in the molecule, it is thought that a cured product of the composition of the present invention exhibits high weather resistance.

Each component used in the composition of the present invention is now described below.

<Epoxy resin>

The epoxy resin is not particularly limited as long as it has two or more glycidyl groups that can react with an active hydrogen in an epoxy resin curing agent described later. The epoxy resin may be any of a saturated or unsaturated aliphatic compound, an alicyclic compound, an aromatic compound, and a heterocyclic compound. From the viewpoint of improving the strength of the structure obtained by curing the paving material composition and the strength retention rate in a humid environment, the epoxy resin is preferably an epoxy resin containing an aromatic ring or an alicyclic structure in the molecule.

Specific examples of the epoxy resin include at least one selected from an epoxy resin having a glycidylamino group derived from metaxylylenediamine, an epoxy resin having a glycidylamino group derived from paraxylylenediamine, an epoxy resin having a glycidylamino group derived from 1,3-bis(aminomethyl)cyclohexane, an epoxy resin having a glycidylamino group derived from 1,4-bis(aminomethyl)cyclohexane, an epoxy resin having a glycidylamino group derived from diaminodiphenylmethane, an epoxy resin having a glycidylamino group and/or glycidyloxy group derived from paraaminophenol, an epoxy resin having a glycidyloxy group derived from bisphenol A, an epoxy resin having a glycidyloxy group derived from bisphenol F, an epoxy resin having a glycidyloxy group derived from hydrogenated bisphenol A, an epoxy resin having a glycidyloxy group derived from hydrogenated bisphenol F, an epoxy resin having a glycidyloxy group derived from phenol novolac, and an epoxy resin having a glycidyloxy group derived from resorcinol. These epoxy resins can also be used in combination of two or more.

Even among the above, from the viewpoint of improving the strength of the structure obtained by curing the paving material composition and the strength retention rate in a humid environment, the epoxy resin preferably has as a main component at least one selected from the group consisting of an epoxy resin having a glycidylamino group derived from metaxylylenediamine, an epoxy resin having a glycidylamino group derived from paraxylylenediamine, an epoxy resin having a glycidyloxy group derived from bisphenol A, an epoxy resin having a glycidyloxy group derived from bisphenol F, an epoxy resin having a glycidyloxy group derived from hydrogenated bisphenol A, and an epoxy resin having a glycidyloxy group derived from hydrogenated bisphenol F, and from the viewpoint of the strength of the structure obtained by curing the paving material composition and the strength retention rate in a humid environment, and the viewpoint of availability and economy, the epoxy resin preferably has as a main component an epoxy resin having a glycidyloxy group derived from bisphenol A.

As used herein, "main component" means that other components may be included up to a range that does not depart from the spirit of the present invention, and the main component is preferably from 50 to 100% by mass, more preferably from 70 to 100% by mass, further preferably from 90 to 100% by mass, of the whole.

The epoxy resin may be either a solid epoxy resin or a liquid epoxy resin, but from the viewpoint of improving the strength of the obtained structure and the strength retention rate in a humid environment, a liquid epoxy resin is more preferable. As used in the present invention, "solid epoxy resin" means an epoxy resin that is a solid at room temperature (25°C), and "liquid epoxy resin" means an epoxy resin that is a liquid at room temperature (25°C).

The epoxy resin may contain a reactive diluent in addition to the above-described epoxy resin that can be included as a main component from the viewpoint of improving handleability. Examples of the reactive diluent include low-molecular-weight compounds having at least one epoxy group, specifically aromatic monoglycidyl ethers such as phenyl glycidyl ether and cresyl glycidyl ether; alkyl monoglycidyl ethers such as butyl glycidyl ether, hexyl glycidyl ether, octyl glycidyl ether, decyl glycidyl ether, lauryl glycidyl ether, and tetradecyl glycidyl ether; diglycidyl ethers of aliphatic diols such as 1,3-propanediol diglycidyl ether, 1,4-butanediol diglycidyl ether, neopentyl glycol diglycidyl ether, and 1,6-hexanediol diglycidyl ether.

The above reactive diluents can be used alone or in combination of two or more.

An epoxy equivalent weight of the epoxy resin is, from the viewpoint of improving the strength and the strength retention rate in a humid environment of the structure obtained by curing the paving material composition, preferably 80 g/eq or more, more preferably 100 g/eq or more, further preferably 120 g/eq or more, and still further preferably 150 g/eq or more, and from the viewpoint of handleability, is preferably 1000 g/eq or less, more preferably 800 g/eq or less, further preferably 500 g/eq or less, still further preferably 300 g/eq or less, and still further preferably 200 g/eq or less.

A commercially available product can also be used as the main agent epoxy resin. Examples of commercially available epoxy resins include "jER825", "jER827", "jER828", "jER801N", "jER801PN", "jER802", "jER811", "jER813", "jER819", "jER806", "jER806H", "jER807", and the like, manufactured by Mitsubishi Chemical Corporation.

<Epoxy resin curing agent>

The epoxy resin curing agent contains 50% by mass or more of a polyamine compound represented by the following formula (1) or a modified product thereof, (A). By using an epoxy resin curing agent containing 50% by mass or more of the component (A), it is possible to form a structure that has high water permeability, weather resistance, and strength, and has excellent strength retention rate even in a humid environment.

$$H_2N\text{-}CH_2\text{-}X\text{-}CH_2\text{-}NH_2 \qquad (1)$$

In formula (1), X is a cyclohexylene group.

In formula (1), X is a 1,2-cyclohexylene group, a 1,3-cyclohexylene group, or a 1,4-cyclohexylene group. From the viewpoint of improving the water permeability, weather resistance, strength, and strength retention rate in a humid environment of a structure obtained by curing the paving material composition, X is preferably a 1,3-cyclohexylene group or a 1,4-cyclohexylene group, and more preferably a 1,3-cyclohexylene group. That is, the polyamine compound represented by formula (1) is one or more bis(aminomethyl)cyclohexanes selected from the group consisting of 1,2-bis(aminomethyl)cyclohexane, 1,3-bis(aminomethyl)cyclohexane, and 1,4-bis(aminomethyl)cyclohexane, preferably one or more selected from the group consisting of 1,3-bis(aminomethyl)cyclohexane and 1,4-bis(aminomethyl)cyclohexane, and more preferably is 1,3-bis(aminomethyl)cyclohexane.

Examples of the modified product of the polyamine compound represented by formula (1) preferably include at least one selected from the group consisting of the following (I) to (IV):

(I) a Mannich reaction product of the polyamine compound represented by formula (1), a phenolic compound, and an aldehyde compound;
(II) a reaction product of the polyamine compound represented by formula (1) and an unsaturated hydrocarbon compound;
(III) a reaction product of the polyamine compound represented by formula (1) and an epoxy compound having at least one epoxy group; and
(IV) a reaction product of the polyamine compound represented by formula (1) and an unsaturated carboxylic acid or a derivative thereof.

((I) Mannich reaction product of the polyamine compound represented by formula (1), a phenolic compound, and an aldehyde compound)

The modified product (I) is a Mannich reaction product of the polyamine compound represented by formula (1), a phenolic compound, and an aldehyde compound.

Examples of the phenolic compound used for the modified product (I) include phenol, alkylphenol, alkenylphenol, terpene phenol, and a naturally occurring phenolic compound such as cardanol. From the viewpoint of improving the water permeability, weather resistance, strength, and strength retention rate in a humid environment of the structure obtained by curing the paving material composition, the number of carbon atoms in the alkyl group in the alkylphenol is preferably from 1 to 24, more preferably from 1 to 18, and the number of carbon atoms in the alkenyl group in the alkenylphenol is preferably from 2 to 24, and more preferably from 2 to 18.

Specific examples of the phenolic compound include phenol, cresol, ethylphenol (p-ethylphenol, etc.), isopropylphenol (o-isopropylphenol, p-isopropylphenol, etc.), butylphenol (p-tert-butylphenol, p-sec-butylphenol, o-tert-butylphenol, o-sec-butylphenol, etc.), amylphenol (p-tert-amylphenol, o-tert-amylphenol, etc.), p-octylphenol, nonylphenol, p-cumylphenol, decylphenol, undecylphenol, p-dodecylphenol, tridecylphenol, tetradecylphenol, pentadecylphenol, pentadecenylphenol, pentadecadienylphenol, pentadecatrienylphenol, hexadecylphenol, heptadecylphenol, octadecylphenol, octadecenylphenol, terpene phenol, and cardanol. These may be used alone or in combination of two or more.

Even among these, from the viewpoint of reactivity with the polyamine compound represented by formula (1), and the viewpoint of improving the water permeability, weather resistance, strength, and strength retention rate in a humid environment of the structure obtained by curing the paving material composition, the phenolic compound used in the modified product (I) is preferably at least one selected from the group consisting of phenol, cresol, p-tert-butylphenol, nonylphenol, and cardanol, and more preferably is phenol.

Examples of the aldehyde compound used for the modified product (I) include formaldehyde; a formaldehyde-releasing compound such as trioxane and paraformaldehyde; and other aldehydes such as benzaldehyde. Even among these, at least one selected from the group consisting of formaldehyde and a formaldehyde-releasing compound is preferable. Among these, from the viewpoint of workability in the Mannich reaction, it is more preferable to use an aqueous formaldehyde solution.

The method for producing the modified product (I) is not particularly limited, and any known method can be used.

For example, the aldehyde compound or a solution thereof may be added dropwise and the like, preferably at 80°C or less, and more preferably at 60°C or less, to a mixture of the polyamine compound and the phenolic compound, after the addition is complete, the temperature was raised to preferably 80 to 180°C, and more preferably 90 to 150°C, and the reaction is allowed to proceed for 1 to 10 hours while removing the distillate from the reaction system.

The ratio of the amounts of the polyamine compound, phenolic compound, and aldehyde compound used in the Mannich reaction is not particularly limited as long as the resulting modified product (I) contains an amino group having an active hydrogen, but from the viewpoint of reactivity with the polyamine compound represented by formula (1), and the viewpoint of improving the water permeability, weather resistance, strength, and strength retention rate in a humid environment of the structure obtained by curing the paving material composition, the amounts used are preferably within the following ranges.

The aldehyde compound is used in an amount of preferably 0.3 to 2 mol, and more preferably 0.5 to 1.5 mol, per 1 mol of the polyamine compound, and the phenolic compound is used in an amount of preferably 0.3 to 2 mol, and more preferably 0.5 to 1.5 mol, per 1 mol of the polyamine compound.

((II) Reaction product of the polyamine compound represented by formula (1) and an unsaturated hydrocarbon compound)

The modified product (II) is a reaction product of the polyamine compound represented by formula (1) and an unsaturated hydrocarbon compound.

The unsaturated hydrocarbon compound used in the modified product (II) is, from the viewpoint of reactivity with the polyamine compound represented by formula (1), and the viewpoint of improving the water permeability, weather resistance, strength, and strength retention rate in a humid environment of the structure obtained by curing the paving material composition, preferably an unsaturated hydrocarbon compound having from 2 to 10 carbon atoms.

Examples of the unsaturated hydrocarbon compound include an unsaturated aliphatic hydrocarbon compound having from 2 to 10 carbon atoms, and an aromatic hydrocarbon compound having from 2 to 10 carbon atoms and an ethylenically unsaturated bond, such as at least one selected from the group consisting of ethylene, propylene, butene, pentene, hexene, heptene, octene, nonene, decene, isobutylene, 2-pentene, 3-methyl-1-butene, 2-methyl-2-butene, 2,3-dimethyl-2-butene, cyclohexene, cyclohexadiene, styrene, and divinylbenzene.

Even among these, from the viewpoint of reactivity with the polyamine compound represented by formula (1), and the viewpoint of improving the water permeability, weather resistance, strength, and strength retention rate in a humid environment of the structure obtained by curing the paving material composition, an aromatic hydrocarbon compound having an ethylenically unsaturated bond, such as styrene and divinylbenzene, is preferable, and styrene is more preferable.

The method for producing the modified product (II) is not particularly limited, and any known method can be used. For example, the modified product (II) can be obtained by subjecting the polyamine compound and the unsaturated hydrocarbon compound to an addition reaction under heating.

The amount of the unsaturated hydrocarbon compound used in the addition reaction is not particularly limited as long as the resulting modified product (II) contains an amino group having an active hydrogen, but the amount used is preferably in the range of 0.1 to 5.0 mol, more preferably 0.4 to 3.0 mol, further preferably 0.5 to 1.5 mol, and still further preferably 0.8 to 1.2 mol, per 1 mol of the polyamine compound.

((III) Reaction product of the polyamine compound represented by formula (1) and an epoxy compound having at least one epoxy group)

The modified product (III) is a reaction product of the polyamine compound represented by formula (1) and an epoxy compound having at least one epoxy group.

Examples of the epoxy compound used in the modified product (III) include epichlorohydrin, butyl glycidyl ether, neopentyl glycol diglycidyl ether, 1,3-propanediol diglycidyl ether, 1,4-butanediol diglycidyl ether, 1,6-hexanediol diglycidyl ether, biphenol diglycidyl ether, dihydroxynaphthalene diglycidyl ether, dihydroxyanthracene diglycidyl ether, triglycidyl isocyanurate, tetraglycidyl glycoluril, a polyfunctional epoxy resin having a glycidylamino group derived from metaxylylenediamine, a polyfunctional epoxy resin having a glycidylamino group derived from 1,3-bis(aminomethyl) cyclohexane, a polyfunctional epoxy resin having a glycidylamino group derived from diaminodiphenylmethane, a polyfunctional epoxy resin having a glycidylamino group and glycidyloxy group derived from paraaminophenol, a polyfunctional epoxy resin having a glycidyloxy group derived from bisphenol A, a polyfunctional epoxy resin having a glycidyloxy group derived from bisphenol F, a polyfunctional epoxy resin having a glycidyloxy group derived from phenol novolac, a polyfunctional epoxy resin having a glycidyloxy group derived from resorcinol, and the like. These may be used alone or in combination of two or more.

The method for producing the modified product (III) is not particularly limited, and any known method can be used.

For example, the modified product (III) can be obtained by subjecting the polyamine compound and the epoxy compound to an addition reaction under heating.

The amount of the polyamine compound and epoxy compound used in the addition reaction is not particularly limited as long as the resulting modified product (III) contains an amino group having an active hydrogen, but it is preferable to use an excess amount of the polyamine compound relative to the epoxy equivalent weight of the epoxy compound. Specifically, the polyamine compound and the epoxy compound are reacted in such a ratio that the number of active hydrogens of the polyamine compound/number of epoxy groups of the epoxy compound is preferably 4 to 50, and more preferably 8 to 20.

((IV) Reaction product of the polyamine compound represented by formula (1) and an unsaturated carboxylic acid or a derivative thereof)

The modified product (IV) is a reaction product of the polyamine compound represented by formula (1) and an unsaturated carboxylic acid or a derivative thereof.

Examples of the unsaturated carboxylic acid or a derivative thereof used in the modified product (IV) include unsaturated carboxylic acids such as acrylic acid, methacrylic acid, $\alpha$-ethylacrylic acid, $\alpha$-propylacrylic acid, $\alpha$-isopropylacrylic acid, $\alpha$-n-butylacrylic acid, $\alpha$-t-butylacrylic acid, $\alpha$-pentylacrylic acid, $\alpha$-phenylacrylic acid, $\alpha$-benzylacrylic acid, crotonic acid, 2-pentenoic acid, 2-hexenoic acid, 4-methyl-2-pentenoic acid, 2-heptenoic acid, 4-methyl-2-hexenoic acid, 5-methyl-2-hexenoic acid, 4,4-dimethyl-2-pentenoic acid, 4-phenyl-2-butenoic acid, cinnamic acid, o-methylcinnamic acid, m-methylcinnamic acid, p-methylcinnamic acid, and 2-octenoic acid, as well as esters, amides, acid anhydrides, and acid chlorides thereof.

Even among the above, the unsaturated carboxylic acid or a derivative thereof is preferably at least one selected from the group consisting of acrylic acid, methacrylic acid, crotonic acid, and derivatives thereof, more preferably at least one selected from the group consisting of acrylic acid, methacrylic acid, crotonic acid, and alkyl esters thereof, further preferably at least one selected from the group consisting of acrylic acid, methacrylic acid, and alkyl esters thereof, still further preferably an alkyl ester of acrylic acid, and still further preferably methyl acrylate.

The method for producing the modified product (IV) is not particularly limited, and any known method can be used. For example, the modified product (IV) can be obtained by reacting the polyamine compound and the unsaturated carboxylic acid or a derivative thereof under heating.

The reaction molar ratio between the polyamine compound and the unsaturated carboxylic acid or a derivative thereof (polyamine compound/unsaturated carboxylic acid or a derivative thereof) is not particularly limited as long as the resulting modified product (IV) contains an amino group having an active hydrogen, but is preferably in the range of 0.3 to 1.0, and more preferably in the range of 0.6 to 1.0.

The polyamine compound and modified product thereof can be used alone or in combination of two or more kinds.

Even among the above, the component (A) is at least one selected from the group consisting of 1,3-bis(aminomethyl)cyclohexane and 1,4-bis(aminomethyl)cyclohexane, and more preferably 1,3-bis(aminomethyl)cyclohexane.

The active hydrogen equivalent weight ("AHEW") of the component (A) is preferably 130 or less, more preferably 120 or less, and further preferably 110 or less. When the AHEW of the component (A) is 130 or less, good curability can be exhibited even when the amount blended in the paving material composition is small. Further, the AHEW of the component (A) is equal to or more than the AHEW of bis(aminomethyl)cyclohexane, and is therefore 35.6 or more.

The AHEW of the component (A) can be determined, for example, by titration.

The content of the component (A) in the epoxy resin curing agent is, from the viewpoint of improving the water permeability, weather resistance, strength, and strength retention rate in a humid environment of the structure obtained by curing the paving material composition, 50% by mass or more, preferably 70% by mass or more, more preferably 85% by mass or more, further preferably 90% by mass or more, and still further preferably 95% by mass or more, and is 100% by mass or less.

(Other curing agent components)

The epoxy resin curing agent may further contain other curing agent components other than the component (A). Examples of "other curing agent components" include a polyamine compound other than the component (A) or a modified product thereof.

Examples of the polyamine compound include a chain aliphatic polyamine compound such as ethylenediamine, diethylenetriamine, triethylenetetramine, tetraethylenepentamine, pentaethylenehexamine, hexamethylenediamine, 2-methylpentamethylenediamine, and trimethylhexamethylenediamine; an aliphatic polyamine compound having an aromatic ring such as orthoxylylenediamine, metaxylylenediamine, and paraxylylenediamine; a polyamine compound having an alicyclic structure such as menthenediamine, isophoronediamine, norbomanediamine, tricyclodecanediamine, adamantanediamine, diaminocyclohexane, 1,4-diamino-2-methylcyclohexane, 1,4-diamino-3,6-diethylcyclohexane, diaminodiethylmethylcyclohexane, 3,3'-dimethyl-4,4'-diaminodicyclohexylmethane(bis(4-amino-3-methylcyclohexyl) methane), 3,3',5,5'-tetramethyl-4,4'-diaminodicyclohexylmethane, and 4,4'-diaminodicyclohexylmethane; an aromatic polyamine compound such as phenylenediamine, diaminodiphenylmethane, diaminodiphenylsulfone, diethyltoluenediamine, 2,2'-diethyl-4,4'-methylenedianiline; a polyamine compound having a heterocyclic structure such as N-aminomethylpiperazine, N-aminoethylpiperazine, and N,N'-bis(aminoethyl)piperazine; a polyether polyamine compound, and the like.

Further, examples of a modified product of the polyamine compound include a Mannich-modified product, epoxy-modified product, Michael adduct, Michael addition/polycondensate, styrene-modified product, modified polyamide, and the like of the compounds described above. These can be used alone or in combination of two or more.

However, the content of curing agent components other than the component (A) in the epoxy resin curing agent is, from the viewpoint of obtaining the effects of the present invention more effectively, 50% by mass or less, preferably 30% by mass or less, more preferably 15% by mass or less, further preferably 10% by mass or less, and still further preferably 5% by mass or less, and may be 0% by mass.

The active hydrogen equivalent weight (AHEW) of the epoxy resin curing agent is, from the viewpoint of expressing high curability even if the amount added to the paving material composition is small, preferably 150 or less, more preferably 140 or less, further preferably 130 or less, and still further preferably 120 or less. On the other hand, from the viewpoint of improving the water permeability, weather resistance, strength, and strength retention rate in a humid environment of the structure obtained by curing the paving material composition, the AHEW of the curing agent is preferably 30 or more, and more preferably 35 or more.

<Aggregate>

The aggregate used in the present invention is preferably an inorganic particulate aggregate for landscape paving. The aggregate may be either a natural aggregate or an artificial aggregate, but from the viewpoint of use as a paving material for landscape paving, a natural aggregate such as natural stone is preferable.

Specific examples of the aggregate include pebbles, river gravel, crushed stone, silica stone, river sand, crushed sand, silica sand, slag, glass beads, crushed glass pieces, crushed pottery pieces, ceramic balls, processed industrial waste products, as well as powders or fine particles of alumina, clay, talc, glass, mica, calcium carbonate, barium sulfate, aluminum oxide, and aluminum hydroxide. One or more of these can be used.

Even among the above, from the viewpoint of use in landscape paving, and the viewpoint of improving the water permeability, weather resistance, strength, and strength retention rate in a humid environment of the structure obtained by curing the paving material composition, as the aggregate, at least one type selected from the group consisting of pebbles and silica sand is preferable, and from the viewpoint of improving the water permeability of the structure obtained by curing the paving material composition, pebbles are more preferable.

The particle size of the aggregate is not particularly limited, but is preferably from 0.002 to 50 mm, more preferably from 0.1 to 30 mm, further preferably from 0.5 to 20 mm, still further preferably from 0.5 to 10 mm. If the particle size of the aggregate is 0.002 mm or more, the effect of an improved water permeability, strength, and strength retention rate in a humid environment of the obtained structure is good. Further, if the particle size of the aggregate is 50 mm or less, the effect of improved strength and strength retention rate in a humid environment of the obtained structure is good.

The particle size of the aggregate can be determined by a method that complies with JIS A1204:2020 "Testing method for soil particle size".

The particle size classification of silica sand is classified into No. 3 to No. 8 in JIS G 5901:2016. When the aggregate is silica sand, the particle size classification of the silica sand is, from the viewpoint of improving the water permeability, weather resistance, strength, and strength retention rate in a humid environment of the structure obtained by curing the paving material composition, preferably silica sand No. 3 to No. 7, more preferably silica sand No. 3 to No. 5, and even more preferably silica sand No. 3 to No. 4.

The particle shape of the aggregate is not particularly limited, and may be either spherical or non-spherical. Spherical includes nearly spherical shapes such as shapes having an elliptical cross section. Non-spherical particle shapes include plate-like, scale-like, chain-like, columnar, crushed pieces, and the like.

The moisture content of the aggregate is not particularly limited, but from the viewpoint of improving the strength and the strength retention rate in a humid environment of the obtained structure, it is preferably 30% by mass or less, more preferably 25% by mass or less, further preferably 20% by mass or less, still further preferably 10% by mass or less, still further preferably 5.0% by mass or less, and still further preferably 3.0% by mass or less. The lower limit value of the moisture content may be 0% by mass, preferably 0.01% by mass or more, more preferably 0.05% by mass or more, and further preferably 0.1% by mass or more.

The moisture content of the aggregate referred to here means the moisture content of the aggregate during blending into the composition of the present invention. Specifically, the moisture content of the aggregate can be measured by the method described in the Examples.

<Other components>

Further, known modifying components such as plasticizers, known flow adjusting components such as thixotropic agents, and known other components such as leveling agents, tackifiers, and curing accelerators may be blended with the paving material composition, within a range not impairing the effects of the present invention.

<Content>

The content or content ratio of each component in the paving material composition is preferably in the following range.

The ratio between the epoxy resin and the epoxy resin curing agent in the paving material composition is, from the viewpoint of curability and the viewpoint of improving the water permeability, weather resistance, strength, and the strength retention rate in a humid environment of the obtained structure, set such that the ratio of the number of active hydrogens in the epoxy resin curing agent to the number of epoxy groups in the epoxy resin, [number of active hydrogens/number of epoxy groups], is preferably 1/0.8 to 1/1.2, more preferably 1/0.9 to 1/1.1, and further preferably 1/1.

The mass ratio of the epoxy resin to the aggregate contained in the paving material composition, [epoxy resin/aggregate], is preferably in the range of 0.005 to 0.5, more preferably 0.01 to 0.3, further preferably 0.01 to 0.2, and still further preferably 0.01 to 0.1. If [epoxy resin/aggregate] is 0.005 or more, the aggregate tends not to fall out of the obtained structure, and if [epoxy resin/aggregate] is 0.5 or less, the water permeability, strength, and strength retention rate in a humid environment of the obtained structure are further improved.

When the aggregate used is a wet aggregate, it is preferable that the mass ratio of the epoxy resin to the dry mass of the aggregate is within the above-described range.

The content of the epoxy resin in the paving material composition is, from the viewpoint of curability and the viewpoint of improving the water permeability, weather resistance, strength, and the strength retention rate in a humid environment of the obtained structure, preferably from 0.1 to 30% by mass, more preferably from 0.2 to 25% by mass, further preferably from 0.5 to 20% by mass, still further preferably from 1.0 to 15% by mass, and still further preferably from 1.0 to 10% by mass.

The content of the epoxy resin curing agent in the paving material composition is, from the viewpoint of curability and the viewpoint of improving the water permeability, weather resistance, strength, the strength retention rate in a humid environment of the obtained structure, preferably from 0.01 to 15% by mass, more preferably from 0.05 to 10% by mass, and further preferably from 0.1 to 5.0% by mass.

The content of the aggregate in the paving material composition is, from the viewpoint of curability and the viewpoint of improving the water permeability, weather resistance, strength, and the strength retention rate in a humid environment of the obtained structure, preferably from 50 to 99.5% by mass, more preferably from 55 to 99% by mass, further preferably from 60 to 99% by mass, still further preferably from 70 to 99% by mass, still further preferably from 80 to 99% by mass, still further preferably from 85 to 99% by mass, and still further preferably from 87 to 99% by mass.

As used herein, "content of the aggregate" means the content based on the dry mass of the aggregate, even in cases where a wet aggregate is used.

The total content of the epoxy resin, epoxy resin curing agent, and aggregate in the paving material composition is, from the viewpoint of improving the water permeability, weather resistance, strength, and the strength retention rate in a humid environment of the obtained structure, preferably 50% by mass or more, more preferably 60% by mass or more, further preferably 70% by mass or more, still further preferably 80% by mass or more, still further preferably 90% by mass or more, and still further preferably 95% by mass or more, and is 100% by mass or less.

The water content in the paving material composition is, from the viewpoint of improving the strength and the strength retention rate in a humid environment of the obtained structure, preferably 10% by mass or less, more preferably 5% by mass or less, and further preferably 2% by mass or less. However, this water content is the amount of water that is intentionally added, and does not exclude, for example, the moisture content that is already contained in each added component.

The content of an organic solvent in the paving material composition is, from the viewpoint of improving the strength and the strength retention rate in a humid environment of the obtained structure, preferably 10% by mass or less, more preferably 5% by mass or less, and further preferably 2% by mass or less, and the lower limit is 0% by mass.

There are no particular limitations on the method for producing the epoxy resin composition of the present invention, and the epoxy resin composition of the present invention can be produced by mixing the epoxy resin, epoxy resin curing agent, aggregate, and optionally-used other components using a known method and apparatus.

[Structure]

The structure of the present invention contains a cured product of the paving material composition of the present invention described above. The paving material composition can be cured by a known method. The curing conditions of the paving material composition are appropriately selected according to the usage environment, the form of the structure, and the like, and are not particularly limited, but it is possible to cure the paving material composition under room temperature conditions in the air.

The structure of the present invention is suitable for use as a paving material, particularly as a landscape paving material.

<Structure characteristics>

The paving material composition of the present invention can provide a structure that is strong and has a high strength retention rate in a humid environment. For example, a 16 cm × 16 cm × 4 cm flat plate structure obtained by curing the paving material composition of the present invention has a maximum bending stress, which is measured when a bending test is performed at a test speed of 1 mm/min in accordance with a method conforming to JIS R 5201:2015, of preferably 2.0 MPa or more, more preferably 2.5 MPa or more, and further preferably 3.0 MPa or more.

Further, the retention rate of the maximum bending stress after immersing the structure in 23°C water for one week is preferably 90% or more, and more preferably 95% or more.

The maximum bending stress and its retention rate can be determined specifically by the method described in the Examples.

Examples

The present invention will now be described in detail with reference to Examples and Comparative Examples, but the present invention is not limited to the following Examples. The various measurements in the Examples were carried out by the following methods.

(Aggregate moisture content)

100 to 150 g of aggregate stored at 23°C and 50% R.H. was weighed out, and dried in a hot air drying machine at 110°C. The weight was measured at appropriate times, and at the point when a change in weight was no longer observed, it was assumed that the moisture had completely dried off, and the moisture content of the aggregate was calculated from the following formula.

Aggregate moisture content (mass%) = [(mass of aggregate before drying (g)) - (mass of aggregate after drying (g))] / (mass of aggregate before drying (g)) × 100

(Water permeability)

The paving material composition obtained in each example was placed in an 11 cm × 11 cm × 2 cm mold and cured by aging for one week in a 23°C and 50% R.H. atmosphere. A 50 mL screw tube filled with water was placed upside down on the obtained flat-plate-like cured product, and the time until the water in the screw tube had completely drained out was measured. Here, the water drained relatively slowly in the first test, but as the test was repeated the time until the water had completely drained out gradually became faster, and finally reached a steady state. Accordingly, this test was repeated using the same cured product, and the test was ended when the rate at which the water drained out became constant. The time it took for the water to completely drain out at the point when the rate at which the water drained out became constant is shown in Table 1. If the time taken for the water to completely drain out is less than 2 minutes, the water permeability can be determined to be good.

(Glass transition temperature (Tg))

The epoxy resin and epoxy resin curing agent shown in Table 1 were mixed so that the number of epoxy groups in the epoxy resin and the number of active hydrogens in the epoxy resin curing agent were equal. The resulting mixture was cured by aging for 7 days under conditions of 23°C and 50% R.H. to prepare a sample. The sample was subjected to differential scanning calorimetry from 35 to 225°C at a heating rate of 10°C/min using a differential scanning calorimeter "TA DSC-25" (manufactured by Omron Corporation) to determine the Tg.

(Weather resistance (YI))

A weather resistance test was carried out in accordance with the ISO4982 Part 3 Method A standard.

The epoxy resin and epoxy resin curing agent shown in Table 1 were mixed so that the number of epoxy groups in the epoxy resin and the number of active hydrogens in the epoxy resin curing agent were equal. The resulting mixture was placed in a 5 cm × 5 cm × 2 mm mold and cured by aging for one week in a 23°C and 50% R.H. atmosphere. The YI value of the obtained flat plate-like cured product (test piece) was measured in accordance with JIS K7373:2006 using a color difference meter ("COH400" manufactured by Nippon Denshoku Industries Co., Ltd.) (cumulative exposure 0 kJ/m$^2$). Then, the test piece was placed in a UV tester "Suntest XXL+" (manufactured by Toyo Seiki Seisaku-sho, Ltd.) and irradiated with ultraviolet light of 300 to 400 nm wavelength from a xenon lamp at an intensity of illuminance of 60 W/m$^2$ at a temperature of 38°C. After the cumulative exposure reached a predetermined amount, the test piece was taken out, and the YI value was measured in the same manner as above. The results are shown in Table 1. The smaller the increase in the YI value, the better the weather resistance of the cured product. In particular, if the YI value is 15 or less at a cumulative exposure of 35,449 kJ/m$^2$, the weather resistance can be determined to be good.

<Maximum bending stress>

The paving material composition shown in Tables 2 and 3 was placed in a 16 cm × 16 cm × 4 cm mold and cured by aging for one week in the air at 23°C and 50% R.H. The obtained cured product was subjected to a bending test (N=3) at a test speed of 1 mm/min using a precision universal testing machine ("Autograph AG-Xplus 100kN", manufactured by Shimadzu Corporation) in accordance with JIS R 5201:2015, and the maximum bending stress before immersion in water was measured. The maximum bending stress was the average value of the three measurements.

The cured product was also immersed in 23°C water for one week and subjected to the bending test in the same manner. The bending stress retention rate of the cured product after immersion in water was calculated based on the following formula.

Bending stress retention rate (%) = (maximum bending stress of the cured product after immersion in water) / (maximum bending stress of the cured product before immersion in water) × 100

Examples 1 to 4 and Comparative Examples 1 to 6 (Preparation and evaluation of paving material composition and cured product (1) - Water permeability and weather resistance)

The epoxy resin, epoxy resin curing agent, and aggregate listed in Table 1 were each weighed out, then blended together and manually stirred for 4 minutes under conditions of 23°C and 50% R.H. to prepare a paving material composition. The epoxy resin and the epoxy resin curing agent were mixed so that the number of epoxy groups in the epoxy resin and the number of active hydrogens in the epoxy resin curing agent were equal.

The composition was used to evaluate water permeability by the method described above. In addition, the epoxy resins and epoxy resin curing agents shown in Table 1 were used to evaluate weather resistance by the method described above. The results are shown in Table 1.

Examples 2 and 4, and Comparative Examples 7 to 16 (Preparation and evaluation of paving material composition and cured product (2) - Strength of cured product before and after immersion in water)

The epoxy resin, epoxy resin curing agent, and aggregate listed in Table 2 and 3 were each weighed out, then blended together and manually stirred for 4 minutes under conditions of 23°C and 50% R.H. to prepare a paving material composition. The epoxy resin and the epoxy resin curing agent were mixed so that the number of epoxy groups in the epoxy resin and the number of active hydrogens in the epoxy resin curing agent were equal.

Using this composition, a cured product was prepared and the strength of the cured product was evaluated (maximum bending stress and bending stress retention rate were measured) by the method described above. The results are shown in Tables 2 and 3.

[Table 1]

Table 1

| | | | Example | Comparative Example | | | | Example | Comparative Example | Example | | Comparative Example |
|---|---|---|---|---|---|---|---|---|---|---|---|---|
| | | | 1 | 1 | 2 | 3 | 4 | 2 | 5 | 3 | 4 | 6 |
| Paving material composition | Epoxy resin | Type | jER828 | jER828 | jER828 | iER828 | iER828 | jER828 | jER828 | iER828 | iER828 | jER828 |
| | Epoxy resin curing agent | Type | 1,3-BAC | MXDA | IPDA | DETA | TETA | 1,3-BAC | AEP | 1,3-BAC | 1,3-BAC | AEP |
| | Aggregate | Type | Silica sand No. 4 | Silica sand No. 4 | Silica sand No. 4 | Silica sand No. 4 | Silica sand No. 4 | Silica sand No. 4 | Silica sand No. 4 | Pebbles | Pebbles | Pebbles |
| | Epoxy resin/aggregate (mass ratio) | | 0.10 | 0.10 | 0.10 | 0.10 | 0.10 | 0.06 | 0.06 | 0.06 | 0.02 | 0.02 |
| | Number of active hydrogens in curing agent/number of epoxy groups in epoxy resin | | 1/1 | 1/1 | 1/1 | 1/1 | 1/1 | 1/1 | 1/1 | 1/1 | 1/1 | 1/1 |
| | Content of epoxy resin in composition | % by mass | 8.9 | 9.0 | 8.9 | 9.0 | 9.0 | 5.6 | 5.6 | 5.6 | 1.9 | 2.0 |
| | Content of epoxy resin curing agent in composition | % by mass | 1.7 | 1.6 | 2.0 | 1.0 | 1.2 | 1.1 | 1.3 | 1.1 | 0.4 | 0.5 |
| | Content of aggregate in composition | % by mass | 89.4 | 89.4 | 89.1 | 90.0 | 89.8 | 93.3 | 93.1 | 93.3 | 97.7 | 97.5 |
| | Total | % by mass | 100.0 | 100.0 | 100.0 | 100.0 | 100.0 | 100.0 | 100.0 | 100.0 | 100.0 | 100.0 |

(continued)

| Evaluation results | | | Example | Comparative Example | | | | Example | Comparative Example | Example | | Comparative Example |
|---|---|---|---|---|---|---|---|---|---|---|---|---|
| | | | 1 | 1 | 2 | 3 | 4 | 2 | 5 | 3 | 4 | 6 |
| | Water per-meability | min/sec | 1:18 | Not permeable | 2:39 | 0:55 | 0:37 | 0:43 | 0:04 | 0:04 | 0:04 | 1:53 |
| | Tg | °C | 54.87 | 51.12 | 51.63 | 50.42 | 49.46 | 54.87 | 50.40 | 54.87 | 54.87 | 50.40 |
| | Weather resistance (YI) | Cumulative exposure 0kJ/m$^2$ | 0.74 | 2.41 | 1.10 | 1.59 | 1.50 | 0.74 | 0.96 | 0.74 | 0.74 | 0.96 |
| | | Cumulative exposure 4273kJ/m$^2$ | 2.17 | 10.10 | 2.98 | 10.29 | 14.94 | 2.17 | - | 2.17 | 2.17 | - |
| | | Cumulative exposure 5071kJ/m$^2$ | - | - | - | - | - | - | 17.95 | - | - | 17.95 |
| | | Cumulative exposure 9251kJ/m$^2$ | 4.43 | 14.11 | 4.92 | 12.75 | 20.66 | 4.43 | - | 4.43 | 4.43 | - |
| | | Cumulative exposure 10035kJ/m$^2$ | - | - | - | - | - | - | 24.84 | - | - | 24.84 |
| | | Cumulative exposure 29668kJ/m$^2$ | - | - | - | - | - | - | 35.45 | - | - | 35.45 |
| | | Cumulative exposure 30413kJ/m$^2$ | 10.11 | 17.78 | 9.80 | 17.67 | 32.49 | 10.11 | - | 10.11 | 10.11 | - |
| | | Cumulative exposure 35394kJ/m$^2$ | - | - | - | - | - | - | 37.70 | - | - | 37.70 |
| | | Cumulative exposure 35449kJ/m$^2$ | 11.81 | 18.76 | 10.58 | 17.45 | 34.36 | 11.81 | - | 11.81 | 11.81 | - |

[Table 2]

[Table 2]

Table 2

| | | | Example | Comparative Example | | | | | | |
|---|---|---|---|---|---|---|---|---|---|---|
| | | | 4 | 7 | 8 | 9 | 10 | 11 | 12 |
| Paving material composition | Epoxy resin | Type | jER828 | jER828 | jER828 | jER828 | jER828 | jER828 | jER828 |
| | Epoxy resin curing agent | Type | 1,3-BAC | MXDA | IPDA | DETA | TETA | 1,3-BAC/TETA =40/60(w/w) | 1,3-BAC/IPDA =40/60(w/w) |
| | Aggregate | Type | Pebbles | Pebbles | Pebbles | Pebbles | Pebbles | Pebbles | Pebbles |
| | Epoxy resin/aggregate (mass ratio) | | 0.02 | 0.02 | 0.02 | 0.02 | 0.02 | 0.02 | 0.02 |
| | Number of active hydrogens in curing agent/number of epoxy groups in epoxy resin | | 1/1 | 1/1 | 1/1 | 1/1 | 1/1 | 1/1 | 1/1 |
| | Content of epoxy resin in composition | % by mass | 1.9 | 1.9 | 2.0 | 2.0 | 1.9 | 2.0 | 2.0 |
| | Content of epoxy resin curing agent in composition | % by mass | 0.4 | 0.4 | 0.5 | 0.2 | 0.3 | 0.3 | 0.4 |
| | Content of aggregate in composition | % by mass | 97.7 | 97.7 | 97.5 | 97.8 | 97.8 | 97.7 | 97.6 |
| | Total | % by mass | 100.0 | 100.0 | 100.0 | 100.0 | 100.0 | 100.0 | 100.0 |
| Evaluation results | Maximum bending stress (MPa) | Before immersion in water | 2.17 | 2.11 | 1.47 | 0.26 | 1.77 | 1.90 | 1.30 |
| | | One week after immersion in water | 2.37 | 1.82 | 1.42 | 1.60 | 1.52 | 1.60 | 1.50 |
| | Bending stress retention rate (%) | One week after immersion in water | 108.9 | 86.5 | 96.5 | 616.0 | 85.4 | 84.2 | 115.4 |

[Table 3]

Table 3

| | | | Example | Comparative Example | | | |
|---|---|---|---|---|---|---|---|
| | | | 2 | 13 | 14 | 15 | 16 |
| Paving material composition | Epoxy resin | Type | jER828 | jER828 | jER828 | jER828 | jER828 |
| | Epoxy resin curing agent | Type | 1,3-BAC | DETA | TETA | 1,3-BAC/TETA =40/60(w/w) | 1,3-BAC/IPDA =40/60(w/w) |
| | Aggregate | Type | Silica sand No. 4 | Silica sand No. 4 | Silica sand No. 4 | Silica sand No. 4 | Silica sand No. 4 |
| | Epoxy resin/aggregate (mass ratio) | | 0.06 | 0.06 | 0.06 | 0.06 | 0.06 |
| | Number of active hydrogens in curing agent/number of epoxy groups in epoxy resin | | 1/1 | 1/1 | 1/1 | 1/1 | 1/1 |
| | Content of epoxy resin in composition | % by mass | 5.6 | 5.6 | 5.7 | 5.6 | 5.6 |
| | Content of epoxy resin curing agent in composition | % by mass | 1.1 | 0.6 | 0.7 | 0.9 | 1.2 |
| | Content of aggregate in composition | % by mass | 93.3 | 93.8 | 93.6 | 93.5 | 93.2 |
| | Total | % hv mass | 100.0 | 100.0 | 100.0 | 100.0 | 100.0 |
| Evaluation results | Maximum bending stress (MPa) | Before immersion in water | 3.85 | 3.77 | 3.67 | 5.00 | 2.80 |
| | | One week after immersion in water | 3.57 | 2.05 | 1.83 | 2.40 | 3.30 |
| | Bending stress retention rate (%) | One week after immersion in water | 92.6 | 54.4 | 49.9 | 48.0 | 117.9 |

The components listed in Tables 1 to 3 are as follows.

<Epoxy resin>

jER828:

Liquid epoxy resin having a glycidyloxy group derived from bisphenol A, (manufactured by Mitsubishi Chemical Corporation, epoxy equivalent weight 186 g/eq, solid content concentration 100% by mass)

<Epoxy resin curing agent>

1,3-BAC:

1,3-bis(aminomethyl)cyclohexane, manufactured by Mitsubishi Gas Chemical Company, Inc.

MXDA:

Metaxylylenediamine, manufactured by Mitsubishi Gas Chemical Company, Inc. IPDA: Isophoronediamine

DETA:

Diethylenetriamine

TETA:

Triethylenetetramine

<Aggregate>

Silica sand No. 4:

"Nikko Silica Sand No. 4", manufactured by JFE Mineral & Alloy Company, Ltd., particle size 0.6 to 1.2 mm, moisture content 0.2% by mass

Pebbles:

"Pebbles that are gentle on aquatic plants and fish", manufactured by Kamihata Fish Industries Ltd., particle size 1 to 5 mm, moisture content 1.3% by mass

As shown in Table 1, the cured product of the paving material composition of the present invention had high water permeability, and the cured product of the epoxy resin composition (epoxy resin + epoxy resin curing agent) used in the paving material composition had a high Tg and high weather resistance. Further, as shown in Tables 2 and 3, the cured product of the paving material composition of the present invention had a high initial strength (maximum bending stress before immersion in water) and bending stress retention rate after immersion in water, showing that the cured product had high strength and excellent strength retention rate even in a humid environment.

In contrast, as shown in Table 1, compared to the Examples, the cured product of the paving material compositions of Comparative Examples 1, 2, 5, and 6 had low water permeability, the cured product of the epoxy resin compositions (epoxy resin + epoxy resin curing agent) used in the paving material composition of Comparative Examples 1 to 6 had a low Tg, and the cured product of the epoxy resin compositions used in the paving material compositions of Comparative Examples 1, 2, and 4 to 6 had low weather resistance. Further, as shown in Tables 2 and 3, compared to the Examples, the cured product of the paving material compositions of Comparative Examples 7 to 16 were inferior in at least one of initial strength (maximum bending stress before immersion in water) or bending stress retention rate.

Industrial Applicability

According to the present invention, it is possible to provide a paving material composition that can obtain a structure having high water permeability, weather resistance, and strength, and excellent strength retention rate even in a humid environment.

**Claims**

1. A paving material composition comprising:

   an epoxy resin,
   an epoxy resin curing agent comprising 50% by mass or more of a polyamine compound represented by the following formula (1) or a modified product thereof, (A), and
   an aggregate,

$$H_2N\text{-}CH_2\text{-}X\text{-}CH_2\text{-}NH_2 \qquad (1)$$

wherein X is a cyclohexylene group.

2. The paving material composition according to claim 1, wherein the modified product of the polyamine compound is at least one selected from the group consisting of the following (I) to (IV):

(I) a Mannich reaction product of the polyamine compound represented by formula (1), a phenolic compound, and an aldehyde compound;
(II) a reaction product of the polyamine compound represented by formula (1) and an unsaturated hydrocarbon compound;
(III) a reaction product of the polyamine compound represented by formula (1) and an epoxy compound having at least one epoxy group; and
(IV) a reaction product of the polyamine compound represented by formula (1) and an unsaturated carboxylic acid or a derivative thereof.

3. The paving material composition according to claim 1 or 2, wherein a mass ratio of the epoxy resin to the aggregate, [epoxy resin/aggregate], is in a range of 0.005 to 0.5.

4. The paving material composition according to any one of claims 1 to 3, wherein the aggregate has a particle size of 0.002 to 50 mm.

5. A structure comprising a cured product of the paving material composition according to any one of claims 1 to 4.

## INTERNATIONAL SEARCH REPORT

| International application No. |
| --- |
| **PCT/JP2024/004213** |

### A. CLASSIFICATION OF SUBJECT MATTER

*C08G 59/50*(2006.01)i; *C08L 63/00*(2006.01)i; *E01C 7/30*(2006.01)i
FI:  C08G59/50; C08L63/00 C; E01C7/30

According to International Patent Classification (IPC) or to both national classification and IPC

### B. FIELDS SEARCHED

Minimum documentation searched (classification system followed by classification symbols)

C08G59/00-59/72; C08L1/00-101/16; E01C5/00-7/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | US 2021/0253842 A1 (JIANGSU SINOROAD TRANSPORTATION SCIENCE AND TECHNOLOGY CO., LTD.) 19 August 2021 (2021-08-19)<br>claims, column examples (for example, example 1) | 1-5 |
| X | CN 106977966 A (JIANGSU SINOROAD TRANSPORTATION SCIENCE AND TECHNOLOGY CO., LTD.) 25 July 2017 (2017-07-25)<br>claims, example columns, (for example, example 3) | 1-5 |
| X | JP 2002-161076 A (MITSUBISHI GAS CHEMICAL CO., INC.) 04 June 2002 (2002-06-04)<br>claims, paragraph [0001], examples | 1-5 |
| X | JP 2004-75989 A (MITSUBISHI GAS CHEMICAL CO., INC.) 11 March 2004 (2004-03-11)<br>claims, paragraphs [0001], [0002], example columns | 1-5 |
| A | CN 113861796 A (SHANXI TRANSPORTATION SCIENCE AND TECHNOLOGY R & D CO., LTD.) 31 December 2021 (2021-12-31) | 1-5 |

☑ Further documents are listed in the continuation of Box C.  ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 April 2024** | **07 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/004213**

### C. DOCUMENTS CONSIDERED TO BE RELEVANT

| Category* | Citation of document, with indication, where appropriate, of the relevant passages | Relevant to claim No. |
|---|---|---|
| A | CN 107446119 A (JIANGSU SINOROAD ENGINEERING TECHNOLOGY RESEARCH INSTITUTE CO., LTD.) 08 December 2017 (2017-12-08) | 1-5 |
| A | DE 4437419 A1 (RUETGERSWERKE AG) 25 April 1996 (1996-04-25) | 1-5 |
| A | US 4255468 A (H. B. FULLER COMPANY) 10 March 1981 (1981-03-10) | 1-5 |
| A | US 4185132 A (H. B. FULLER COMPANY) 22 January 1980 (1980-01-22) | 1-5 |
| A | JP 4-102604 A (NIPPON STEEL CHEM. CO., LTD.) 03 April 1992 (1992-04-03) | 1-5 |
| A | JP 2000-80152 A (MITSUBISHI CHEMICAL CORPORATION) 21 March 2000 (2000-03-21) | 1-5 |
| A | JP 7-11106 A (SANYO CHEMICAL INDUSTRIES, LTD.) 13 January 1995 (1995-01-13) | 1-5 |
| A | CN 114891319 A (SOUTHEAST UNIVERSITY) 12 August 2022 (2022-08-12) | 1-5 |
| A | JP 2004-263177 A (MITSUBISHI GAS CHEMICAL CO., INC.) 24 September 2004 (2004-09-24) | 1-5 |
| A | WO 2018/096868 A1 (MITSUBISHI GAS CHEMICAL CO., INC.) 31 May 2018 (2018-05-31) | 1-5 |

Form PCT/ISA/210 (second sheet) (July 2022)

## INTERNATIONAL SEARCH REPORT
### Information on patent family members

International application No.

**PCT/JP2024/004213**

| Patent document cited in search report | | | Publication date (day/month/year) | Patent family member(s) | | | Publication date (day/month/year) |
|---|---|---|---|---|---|---|---|
| US | 2021/0253842 | A1 | 19 August 2021 | WO | 2020/223872 | A1 | |
| CN | 106977966 | A | 25 July 2017 | (Family: none) | | | |
| JP | 2002-161076 | A | 04 June 2002 | US | 2002/0055605 | A1 | |
| | | | | claims, paragraph [0002], column examples | | | |
| | | | | EP | 1188740 | A2 | |
| JP | 2004-75989 | A | 11 March 2004 | US | 2004/0044176 | A1 | |
| | | | | claims, paragraphs [0002]-[0004], column examples | | | |
| | | | | EP | 1375554 | A1 | |
| CN | 113861796 | A | 31 December 2021 | (Family: none) | | | |
| CN | 107446119 | A | 08 December 2017 | (Family: none) | | | |
| DE | 4437419 | A1 | 25 April 1996 | EP | 709350 | A1 | |
| US | 4255468 | A | 10 March 1981 | (Family: none) | | | |
| US | 4185132 | A | 22 January 1980 | US | 4088633 | A | |
| JP | 4-102604 | A | 03 April 1992 | (Family: none) | | | |
| JP | 2000-80152 | A | 21 March 2000 | (Family: none) | | | |
| JP | 7-11106 | A | 13 January 1995 | (Family: none) | | | |
| CN | 114891319 | A | 12 August 2022 | JP | 2023-184472 | A | |
| | | | | US | 2023/0407083 | A1 | |
| | | | | EP | 4293063 | A1 | |
| JP | 2004-263177 | A | 24 September 2004 | US | 2004/0171770 | A1 | |
| | | | | EP | 1452554 | A1 | |
| WO | 2018/096868 | A1 | 31 May 2018 | US | 2019/0256645 | A1 | |
| | | | | EP | 3546494 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002294616 A